# EUROPÄISCHE PATENTSCHRIFT

(11) **EP 3 208 034 B1**
(45) Veröffentlichungstag und Bekanntmachung des Hinweises auf die Patenterteilung: **15.12.2021**
(21) Anmeldenummer: 17156654.0
(22) Anmeldetag: 17.02.2017
(51) Int. Cl.: B23Q 3/155

(54) **WERKZEUGMAGAZIN**
TOOL MAGAZINE
MAGASIN D'OUTILS

(30) Priorität: 19.02.2016 DE 102016102996
(43) Veröffentlichungstag der Anmeldung: 23.08.2017
(73) Patentinhaber: Grob-Werke GmbH & Co. KG, 87719 Mindelheim (DE)
(72) Erfinder: Höbel, Alfred, 87493 Lauben (DE)
(74) Vertreter: Patentanwälte Olbricht, Buchold, Keulertz Partnerschaft mbB

(56) Entgegenhaltungen:
- EP-A1- 0 255 567
- EP-A1- 2 918 373
- EP-A2- 1 016 497
- EP-B1- 0 255 567
- DE-A1- 19 708 096
- DE-A1-102005 006 398
- DE-C1- 3 720 180
- DE-U1- 29 902 127

## Beschreibung

Die Erfindung betrifft ein Werkzeugmagazin zur Bereitstellung von Werkzeugen für eine Werkzeugmaschine, wobei das Werkzeugmagazin eine Vielzahl von Aufnahmepositionen für Werkzeuge aufweist und ein erstes Werkzeug entlang einer Entnahmerichtung aus einer ersten Aufnahmeposition entnehmbar oder einlegbar ist und das Werkzeugmagazin mindestens eine weitere Aufnahmeposition aufweist. Bei verschiedenen, spanabhebenden Bearbeitungsvorgängen wie Fräsen, Bohren, Drehen, Schleifen, Polieren oder ähnlichen Verfahren, die mit Werkzeugmaschinen durchgeführt werden, werden für die Herstellung von komplexeren Werkstücken oft viele verschiedene Werkzeuge benötigt.

Um die Logistik für diese Werkzeuge einfach zu gestalten und gleichzeitig die benötigten Zeiten für die Werkzeugwechsel gering zu halten existieren verschiedene Ausführungsformen von Werkzeugmagazinen für Werkzeugmaschinen. Diese Werkzeugmagazine sind meist als Baugruppe der Werkzeugmaschine ausgeführt. Oft weisen derartige Werkzeugmagazine Transfereinrichtungen auf, die die Werkzeuge von ihren Lagerplätzen im Werkzeugmagazin aufnehmen und der Spindel der Werkzeugmaschine bei Bedarf automatisch zuführen. Damit die Transfereinrichtung alle Werkzeuge jederzeit erreichen kann, wenn diese für die Bearbeitung des Werkstücks benötigt werden, werden die einzelnen Werkzeuge im Werkzeugmagazin im weitesten Sinne nebeneinander angeordnet.

Diese Anordnung der Werkzeuge nebeneinander ist verschiedenartig ausgeführt, beispielsweise als zweidimensionales Regal, als bewegliches Magazinrad, als Magazinkette oder Ähnliches. Gemeinsam haben alle diese Lagerungskonzepte, dass jedes Werkzeug direkt erreichbar ist.

Die DE 299 02 127 U1, die die Basis für den Oberbegriff des beiliegenden Anspruchs 1 bildet, offenbart beispielsweise ein Werkzeugmagazin, bei dem die Transfereinrichtung als Roboter mit mehreren, gelenkig miteinander verbundenen Armelementen ausgebildet ist.

Solche Werkzeugmagazine, nach dem Stand der Technik, haben den Nachteil, dass die Transfereinrichtung zum Erreichen einzelner Werkzeuge oftmals weite Strecken zurücklegen muss, da eine Werkzeuglagerung nebeneinander bei einer hohen Werkzeuganzahl große Ausdehnungen des Werkzeugmagazins erzeugt. Die Folge von langen Wegen beim Werkzeugwechsel ist ein dementsprechend hoher Zeitbedarf für die Bewegungen der Transfervorrichtung.

Ein weiterer Nachteil bekannter Werkzeugmagazine ist, dass für eine größere Anzahl an einlagerbaren Werkzeugen ein unverhältnismäßig großer Bauraum benötigt wird, da nur ein geringes Volumen für die Werkzeuglagerung verwendet wird und der größere Teil des benötigten Bauraums als freizulassender Bewegungsraum für die Transfereinrichtung im Werkzeugmagazin verloren geht. Dieser hohe Bauraumbedarf für bekannte Werkzeugmagazine stellt somit eine uneffektive Raumausnutzung auf meist knappen Produktionsflächen dar. Schlecht genutzter Bauraum bzw. verschwendete Produktionsflächen für ineffiziente Werkzeugmagazine verschlechtern dabei die Wirtschaftlichkeit von Produktionsbetrieben, die komplexe Werkstückbearbeitungen mit einer größeren Anzahl von Werkzeugen durchführen.

Die Aufgabe der Erfindung ist es daher, ein Werkzeugmagazin vorzuschlagen, welches gegenüber dem Stand der Technik eine verbesserte ist.

Die Aufgabe der Erfindung wird gelöst durch ein Werkzeugmagazin nach Anspruch 1.

Bei einem erfindungsgemäßen Werkzeugmagazin sind mindestens zwei Werkzeuge, in Entnahmerichtung betrachtet, hintereinander angeordnet. Unter Entnahmerichtung ist hier die Richtung zu verstehen, in der sich das entsprechende Werkzeug aus dem Magazin entnehmen lässt und in der sich das Werkzeug auch wieder in das Magazin einlagern lässt. Falls in einer Ausführungsform eine automatisch arbeitende Transfereinrichtung die Werkzeugbewegung übernimmt, bewegt sich diese Transfereinrichtung, oder zumindest Teile davon bei Entnahme und Einlagerung des Werkzeugs in eben dieser beschriebenen Entnahmerichtung.

In einem erfindungsgemäßen Werkzeugmagazin sind Werkzeuge somit nebeneinander, wie auch hintereinander angeordnet. Dadurch ergibt sich eine deutlich verbesserte Raumausnutzung des Werkzeugmagazins, da Werkzeuge nun in drei Dimensionen und nicht wie bisher nur in zwei Dimensionen im Werkzeugmagazin eingelagert werden können. Je mehr Werkzeuge in Entnahmerichtung hintereinander im Werkzeugmagazin angeordnet sind, desto höher wird die räumliche Packungsdichte und damit die Raumausnutzung bei der Werkzeuglagerung. Dabei sind die verschiedensten Anordnungskonzepte für Werkzeuge mit zur Erfindung gehörend, wie beispielsweise die Anordnung in regalähnlicher Form, wobei die Werkzeuge in Reihen und Spalten und zusätzlich erfindungsgemäß in Ebenen hintereinander angeordnet werden. Es ist auch möglich Werkzeuge hintereinander in anderweitig geometrisch gestalteten Werkzeugmagazinen unterzubringen. Zwei oder mehr Werkzeuge können auch in Magazinrädern, Magazingurten, Magazinketten oder Ähnlichem in Entnahmerichtung hintereinander angeordnet sein. In all diesen Ausführungsformen nimmt jedes Werkzeug eine eigene Aufnahmeposition im Werkzeugmagazin ein, wobei diese Aufnahmepositionen bezogen auf die Entnahmerichtung nebeneinander oder hintereinander angeordnet sein können.

Erfindungsgemäß ist mindestens eine Transfereinrichtung vorgesehen, die zumindest einen Teil des Transports der Werkzeuge im Werkzeugmagazin und/oder zu einer Schnittstelle vornimmt. In dieser Ausführungsform der Erfindung ist eine Transfereinrichtung vorgesehen, welche zumindest einen Teil der Bewegungen der Werkzeuge im Werkzeugmagazin ausführt und/oder die Werkzeuge auch zu Schnittstellen oder direkt zu einer Werkzeugspindel transportiert. Diese Transfereinrichtung entnimmt beispielsweise ein Werkzeug aus einer Aufnahmeposition im Werkzeugmagazin, bewegt es dann zu einer von einem Einsetzgreifer gebildeten Schnittstelle und übergibt an dieser Schnittstelle das entnommene Werkzeug an den Einsetzgreifer.

Selbstverständlich ist auch ein Transport bzw. Transfer von Werkzeugen von einer solchen Schnittstelle zurück zur Aufnahmeposition im Werkzeugmagazin möglich. Die Schnittstelle kann dabei auch von der Spindel selbst gebildet werden. Dabei muss nicht die gesamte Bewegung des oder der Werkzeuge durch die Transfereinrichtung vorgenommen werden, es sind auch Bauformen denkbar bei denen sich das Werkzeugmagazin bzw. die Aufnahmepositionen bewegen, wie beispielsweise bei einer Magazinkette. In diesem Fall wird ein Teil der Bewegung bzw. des Transfers des Werkzeugs von der Magazinkette und ein anderer Teil von der Transfereinheit vorgenommen.

Des Weiteren ist vorgesehen, dass die Transfereinrichtung um eine Drehachse drehbar ist. Bevorzugt ist auch vorgesehen, dass sie entlang zumindest einer Längsachse beweglich gelagert ist. In dieser Ausführungsform ist die Transfereinrichtung drehbar um eine Drehachse im Werkzeugmagazin gelagert. Diese drehbare Lagerung ist besonders günstig bei einer Anordnung der einzelnen Aufnahmepositionen im Werkzeugmagazin in kreisförmigen Bahnen. Die Erfindung ist aber nicht auf kreisförmige Bahnen beschränkt, es sind auch andere geometrische Formen der Anordnung wie beispielsweise in Ellipsenform, linearer Form oder einer Mischform von linearen und gekrümmten Bereichen möglich. Durch eine einfache Drehbewegung der Transfereinrichtung können die verschiedenen nebeneinander angeordneten Aufnahmepositionen angefahren und erreicht werden. Eine Anordnung von mehreren Aufnahmepositionen hintereinander, beispielsweise in konzentrischen Kreisbögen, erzeugt eine hohe Packungsdichte der Werkzeuge bei der Lagerung und ermöglicht gleichzeitig eine einfache und stabile Bauweise der Transfereinrichtung. Für die Anordnung mehrerer konzentrischen Kreisbögen mit Aufnahmepositionen zusätzlich übereinander wird zumindest eine weitere Bewegungsrichtung der Transfereinrichtung erforderlich. Dazu wird die Transfereinrichtung beweglich entlang zumindest einer Längsachse gelagert. Beispielsweise können Reihen von Aufnahmepositionen in horizontal verlaufenden Kreisbögen angeordnet sein und zusätzlich mehrere solcher Reihen von Aufnahmepositionen vertikal übereinander angebracht sein. Die Transfereinrichtung wird dann so ausgelegt, dass eine Rotationsbewegung um eine Drehachse und eine Translationsbewegung entlang zumindest einer vertikal verlaufenden Längsachse möglich ist. Dadurch können alle Aufnahmepositionen in einfacher Weise durch eine Mischbewegung aus Rotation und Translation der Transfereinrichtung erreicht werden. Selbstverständlich können zusätzlich auch noch weitere Drehachsen oder Längsachsen vorgesehen werden, entlang der sich die Transfereinrichtung, oder zumindest ein Teil der Transfereinrichtung bewegen kann.

Erfindungsgemäß weist die Transfereinrichtung drei oder mehr Greifer auf, wobei ein erster Greifer dafür vorgesehen ist, ein einzulagerndes Werkzeug zu tragen, ein zweiter Greifer dafür vorgesehen ist, das auszulagernde Werkzeug zu tragen und mindestens ein weiterer Greifer als temporärer Zwischenspeicher für ein, auf einer das Ein- und Auslagern des benötigten Werkzeugs behindernden Aufnahmeposition zunächst ruhendes Werkzeug vorgesehen ist. In dieser Ausführungsform wird ein Greifer der Transfereinrichtung als Zwischenspeicher für Werkzeuge bei der Ein- oder Auslagerung der Werkzeuge in oder aus den Aufnahmepositionen verwendet. Wird von der Werkzeugmaschine ein Werkzeug benötigt, welches sich im Werkzeugmagazin auf eine Aufnahmeposition hinter einem anderen Werkzeug befindet, so muss zur Entnahme eben dieses benötigten Werkzeugs zunächst das Werkzeug entnommen werden, welches sich in Entnahmerichtung vor dem benötigten Werkzeug befindet. Erst nach Entnahme dieses ersten Werkzeugs ist der Weg frei zur Entnahme des benötigten Werkzeugs.

Das zuerst entnommene Werkzeug wird während der Entnahme des benötigten zweiten Werkzeugs von einem Greifer gehalten und zwischengespeichert. Nach der Entnahme des benötigten Werkzeugs durch einen anderen Greifer kann dann das zuerst entnommene, nicht benötigte Werkzeug wieder in einer Aufnahmeposition des Werkzeugmagazins eingelagert werden. Dies erfolgt dann durch den Greifer, der das Werkzeug in der Zwischenzeit zwischengespeichert hatte. Je mehr Aufnahmepositionen in Entnahmerichtung hintereinander angeordnet sind, desto mehr Greifer zur Zwischenspeicherung werden benötigt. Da sich das benötigte Werkzeug im schlimmsten Fall in der, in Entnahmerichtung hintersten Position befinden kann, sind zur Zwischenspeicherung Greifer in der Anzahl hintereinander vorhandener Aufnahmepositionen abzüglich des Greifers für das tatsächlich benötigte Werkzeug erforderlich. Zusätzlich kann ein weiterer Greifer vorgesehen sein, der das einzulagernde Werkzeug trägt, welches beispielsweise an der Aufnahmeposition eingelagert werden soll, von der das aktuell benötigte Werkzeug ausgelagert wird. In diesem Fall bringt die Transfereinrichtung bei der Abholung des aktuell benötigten Werkzeugs bereits ein einzulagerndes Werkzeug mit. Bei dem nun erfolgenden Wechselvorgang entnehmen, wenn nötig, ein oder mehrere Greifer Werkzeuge von Aufnahmepositionen, die zwischengespeichert werden sollen, ein Greifer entnimmt das benötigte Werkzeug und ein anderer Greifer lagert das mitgebrachte Werkzeug auf der gewünschten Aufnahmeposition ein. Durch dieses Vorsehen von mehreren Greifern wird der Weg der Transfereinrichtung innerhalb des Werkzeugmagazins minimiert, da eine Zwischenspeicherung direkt bei den Aufnahmepositionen erfolgt. Die Greifer können dabei sternförmig zueinander angeordnet sein. Alternativ sind auch andere Formen der Anordnung der Greifer möglich, wie beispielsweise linear hintereinander. Alternativ zur Zwischenspeicherung von Werkzeugen in dafür vorgesehenen Greifer an der Transfereinrichtung ist eine Zwischenspeicherung auf Zwischenlagerplätzen. In diesem Fall werden Werkzeuge, die aktuell nicht direkt benötigt werden, auf einem oder mehreren Zwischenlagerplätzen abgelegt und nach Entnahme des angeforderten Werkzeugs wieder in ihre Aufnahmepositionen zurückgebracht. Vorteilhaft an dieser Ausgestaltung ist, dass weniger Greifer benötigt werden.

Erfindungsgemäß ist vorgesehen, dass die Transfereinrichtung einen um die Drehachse drehbaren Träger aufweist, an dessen Enden jeweils mindestens ein Greifer zur Aufnahme von Werkzeugen vorgesehen ist. Bevorzugt sind an einem Ende zwei Greifer vorgesehen. In dieser Ausführungsform weist die Transfereinrichtung einen Träger auf, der drehbar um die Drehachse angebracht ist. Dieser Träger kann dabei zusätzlich linear beweglich parallel zu und/oder in einem Winkel zur Drehachse ausgeführt sein. An den Enden des drehbar gelagerten Trägers sind jeweils ein oder mehrere Greifer zur Aufnahme von Werkzeugen angebracht. Wird an der Werkzeugmaschine ein Werkzeug benötigt, welches sich in Entnahmerichtung betrachtet hinter einem anderen, nicht benötigten Werkzeug befindet, so kann der Greifer an einem Ende des Trägers zunächst das nicht benötigte Werkzeug aus seiner Aufnahmeposition entnehmen. Anschließend erfolgt eine Drehung der Transfereinrichtung und damit des Trägers um die Drehachse. Der Greifer am gegenüberliegenden Ende des Trägers entnimmt dann das benötigte Werkzeug, zu dem der Zugang nun frei ist. Nach einer weiteren Drehbewegung des Trägers kann der Greifer, der das zuerst entnommene Werkzeug trägt, dieses wieder in seine Aufnahmeposition zurückbringen. Zusätzlich kann an einem oder an beiden Enden des Trägers ein oder mehrere weitere Greifer angebracht werden. Diese Greifer können dann, wie im zuvor beschriebenen Ausführungsbeispiel, Werkzeuge bei der Entnahme oder Einlagerung in das Werkzeugmagazin zwischenspeichern.

Vorteilhafter Weise ist vorgesehen, dass die Aufnahmepositionen bewegbar sind und sich beim Werkzeugtransfer relativ zur Transfereinrichtung bewegen. In dieser Ausführungsform sind die Lagerplätze, d.h. die Aufnahmepositionen im Werkzeugmagazin bewegbar ausgeführt. Dies kann beispielsweise in Form einer Magazinkette oder eines Magazinrades realisiert werden. Selbstverständlich sind auch regalartig ausgeführte Aufnahmepositionen beweglich ausführbar. Beim Werkzeugtransfer wird dann die Aufnahmeposition, auf der sich das benötigte Werkzeug befindet, zur Transfereinrichtung hin bewegt. Die Transfereinrichtung muss dann nur noch kleinere Bewegungen zur eigentlichen Entnahme des Werkzeugs aus der Aufnahmeposition durchführen. Vorteilhaft an dieser Bauweise ist, dass die Transfereinrichtung einfacher ausgeführt werden kann, da für diese weniger Bewegungsrichtungen und Freiheitsgrade benötigt werden.

In einer vorteilhaften Ausgestaltung ist vorgesehen, dass die Aufnahmepositionen im Wesentlichen ortsfest sind und sich beim Werkzeugtransfer die Transfereinrichtung relativ zu den Aufnahmepositionen bewegt. Bei dieser Ausführungsform erfolgt beim Werkzeugtransfer ausschließlich eine Bewegung der Transfereinrichtung. Die Aufnahmepositionen der eingelagerten Werkzeuge im Werkzeugmagazin bleiben dabei im Wesentlichen ortsfest. Vorteilhaft an dieser Ausgestaltung ist die einfachere Bauweise der Aufnahmepositionen und deren Grundkonstruktion.

Geschickter Weise ist vorgesehen, dass sich das Werkzeugmagazin außerhalb oder innerhalb der Werkzeugmaschine befindet, für die es die Werkzeuge bereitstellt. Ein Werkzeugmagazin, nach einer der zuvor beschriebenen Ausführungsformen, kann entweder außerhalb oder innerhalb einer Werkzeugmaschine angeordnet sein. Eine Anordnung innerhalb der Werkzeugmaschine bietet den Vorteil, dass die Wege für den Transfer der Werkzeuge zur Werkzeugspindel sehr kurz sind. Eine Anordnung eines Werkzeugmagazins außerhalb der Werkzeugmaschine bietet dagegen die Möglichkeit, Wartungs- oder Kontrollarbeiten an den Werkzeugen durchzuführen, während die Werkzeugmaschine ein Werkstück bearbeitet. Die Gefahren durch den laufenden Bearbeitungsprozess für Personen, die mit Arbeiten im Werkzeugmagazin betraut sind, sind bei einer Anordnung außerhalb der Werkzeugmaschine deutlich niedriger, als bei einer Anordnung im Inneren der Werkzeugmaschine.

In einer vorteilhaften Ausgestaltung ist vorgesehen, dass eine Vielzahl von Aufnahmepositionen in mehreren Etagen hintereinander oder übereinander angeordnet ist. In dieser Ausführungsform der Erfindung sind Aufnahmepositionen in mehreren Etagen angeordnet. Eine Anordnung in mehreren Etagen sorgt für eine noch bessere Ausnutzung der Produktionsflächen, da weitere Aufnahmepositionen in der dritten Dimension nach oben geschaffen werden, ohne dass mehr Grundfläche benötigt wird. Dabei bleibt der Erweiterungsaufwand für die Transfereinrichtung gering, da lediglich eine weitere lineare Bewegungsachse für die Transfereinrichtung bzw. die Aufnahmepositionen vorgesehen werden muss. In den einzelnen Etagen werden die Werkzeuge dann erfindungsgemäß in Aufnahmepositionen angeordnet, die bezogen auf die Entnahmerichtung hintereinander und nebeneinander angeordnet sind.

Des Weiteren kann vorgesehen sein, dass das Werkzeugmagazin als Regal-, Scheiben-, Ringmagazin oder Ähnliches ausgebildet ist und die Aufnahmepositionen von einem plattenförmigen Element des Werkzeugmagazins gebildet werden, in welches Aufnahmeschlitze eingebracht sind und die Werkzeuge hintereinander in Entnahmerichtung in diesen Aufnahmeschlitzen angeordnet sind. In dieser Ausführungsform bildet ein plattenförmiges Element die Basis für die Aufnahmepositionen. In dieses plattenförmige Element sind Aufnahmeschlitze eingebracht, die die eingelagerten Werkzeuge hintereinander aufnehmen. Die Entnahmerichtung verläuft dabei parallel zu diesen Aufnahmeschlitzen. Die Werkzeuge werden bei der Einlagerung einfach in diese Schlitze gehängt. Dabei kann die Aufnahme rein über Formschluss oder auch über unterstützende Elemente wie gefederte Andrückelemente, Zangen oder Ähnliches unterstützt werden. Die Anordnung der Aufnahmepositionen in plattenförmigen Elementen, die mit Aufnahmeschlitzen versehen sind, stellt ein einfaches, stabiles und kostengünstiges Lagerungskonzept dar. Die plattenförmigen Basiselemente mit den Aufnahmeschlitzen können dabei wiederum auf verschiedene Arten zueinander angeordnet sein. Bekannte Ausführungsformen stellen dabei Regal-, Scheiben-, Ringmagazine dar. Darüber hinaus können derartige plattenförmige Elemente auch in gurt- oder kettenförmigen Werkzeugmagazinen angebracht werden.

In einer vorteilhaften Ausgestaltung ist vorgesehen, dass an dem Aufnahmeschlitz mindestens ein Indexierbereich vorgesehen ist, der die radiale/rotatorische Ausrichtung eines Werkzeugs in der Aufnahmeposition bestimmt. In dieser Ausführungsform ist in den Aufnahmeschlitzen ein oder mehrere Indexierbereiche vorgesehen. Durch diese Bereiche wird sichergestellt, dass die Werkzeuge, die in den Aufnahmepositionen eingelagert sind, stets die gleiche und bekannte rotatorische Ausrichtung zum Aufnahmeschlitzen bzw. der Aufnahmepositionen haben. Diese Indexierbereiche können mechanisch über Formschluss realisiert werden. So kann beispielsweise an den Rändern des Aufnahmeschlitzes die negative Form von Ausrichtungselementen an den Werkzeuggeschäften vorgesehen sein. Beim Einlagern werden dann die Ausrichtungselemente der Werkzeugschäfte in die negativen Formen der Aufnahmeschlitze gedreht. Alternativ sind selbstverständlich auch anders ausgeführte Indexierbereiche möglich, beispielsweise mit elektrischen oder magnetischen Funktionsprinzip.

Bei einer bevorzugten Ausgestaltung des Vorschlags ist vorgesehen, dass als Werkzeugmagazin ein Kettenmagazin vorgesehen ist und die Aufnahmeposition an mindestens einem Kettenglied angeordnet ist. In dieser Ausführungsform wird die Erfindung in Kombination mit einem bekannten Kettenmagazin realisiert. Das Kettenmagazin weist dabei einzelne Kettenglieder auf, die beweglich zueinander angeordnet sind. In zumindest einem dieser Kettenglieder sind Aufnahmepositionen, in Entnahmerichtung betrachtet, hintereinander angeordnet.

Die Aufgabe der Erfindung wird ebenfalls gelöst durch eine Werkzeugmaschine mit mindestens einem Werkzeugmagazin, nach einer oder mehreren der vorhergehend beschriebenen Ausführungsformen. Eine Werkzeugmaschine, welche ein erfindungsgemäßes Werkzeugmagazin aufweist, verbessert ebenfalls die Raumausnutzung bei der Werkzeuglagerung und Werkzeugbereitstellung. Die Werkzeugmaschine kann dabei ein Werkzeugmagazin nach einer der bereits beschriebenen Ausführungsformen in ihrem Inneren, direkt daran angrenzend oder benachbart aufweisen.

In einer vorteilhaften Ausgestaltung ist vorgesehen, dass sich mindestens ein erstes erfindungsgemäßes Werkzeugmagazin nach einer oder mehreren der bereits beschriebenen Ausführungsformen außerhalb der Werkzeugmaschine befindet und in oder an der Werkzeugmaschine ein zweites Werkzeugmagazin vorgesehen ist. In dieser Ausführungsform einer Werkzeugmaschine sind zwei Werkzeugmagazine vorhanden. Zumindest ein erfindungsgemäßes Werkzeugmagazin nach einer der weiter oben beschriebenen Ausführungsformen ist außerhalb der Werkzeugmaschine vorhanden und mit der Werkzeugmaschine über eine Schnittstelle verbunden. Diese Anordnung, außerhalb oder angrenzend an die Werkzeugmaschine, hat den Vorteil, dass Wartungs- und Kontrollarbeiten komfortabel außerhalb des Arbeitsbereichs der Werkzeugmaschine durchgeführt werden können. Weiterhin ist die Entnahme und Bestückung von Werkzeugen durch einen Bediener bei einem außerhalb der Werkzeugmaschine angeordneten Werkzeugmagazin aus Gründen der Zugänglichkeit deutlich einfacher. Weiterhin ist bei einer Werkzeugmaschine dieser Ausführungsform ein zweites Werkzeugmagazin innerhalb oder an der Werkzeugmaschine vorgesehen. Dieses Werkzeugmagazin kann beispielsweise technisch sehr einfach und nach dem Stand der Technik ausgeführt werden. Eine kleinere Anzahl an Werkzeugen wird in dem zweiten Werkzeugmagazin vorgehalten. Der Werkzeugwechsel erfolgt zwischen diesem zweiten Werkzeugmagazin und der Spindel der Werkzeugmaschine. Somit können lediglich Werkzeuge aus dem zweiten Werkzeugmagazin direkt zur Werkstückbearbeitung in die Spindel der Werkzeugmaschine eingebracht werden. Das erfindungsgemäße erste Werkzeugmagazin befüllt über eine Schnittstelle das zweite Werkzeugmagazin, von welchen aus dann der Werkzeugwechsel an der Spindel erfolgt. Diese Ausgestaltung hat den Vorteil, dass vorhandene Werkzeugmaschinen mit einfach ausgeführten Werkzeugmagazinen einfach und schnell mit einem erfindungsgemäßen Werkzeugmagazin, mit deutlich optimierter Raumausnutzung, kombiniert werden können. Somit lässt sich auch bei einem vorhandenen Maschinenpark die Nutzung der Produktionsflächen durch Nachrüsten eines erfindungsgemäßen Werkzeugmagazins effizienter gestalten. Dies ist gerade dann interessant, wenn ein Hersteller die Bearbeitung komplexerer Werkstücke avisiert, die eine größere Anzahl an unterschiedlichen Bearbeitungswerkzeugen als bisher erfordern. Selbstverständlich kann das zweite Werkzeugmagazin in oder an der Werkzeugmaschine auch als erfindungsgemäßes Werkzeugmagazin ausgeführt sein. Durch die Kombination und Zusammenarbeit zweier erfindungsgemäßer Werkzeugmagazine wird die Raumausnutzung für die Werkzeuglagerung nochmals optimiert.

Die Aufgabe der Erfindung wird auch gelöst durch die Verwendung eines Werkzeugmagazins nach einer oder mehreren der bereits beschriebenen Ausführungsformen für die Anordnung und Bereitstellung von Werkzeugen, welche eine identische Ausführung aufweisen und für identische Bearbeitungsschritte an Werkstücken vorgesehen sind, in benachbarten Aufnahmepositionen, die in Entnahmerichtung hintereinander angeordnet sind. Manche Werkzeugmaschinen weisen zwei oder mehr gleichartig ausgeführte Werkzeugspindeln auf. Mit solchen Werkzeugmaschinen können gleichzeitig mehrere identische Werkstücke bearbeitet werden, wobei von jeder einzelnen Spindel ein Werkstück bearbeitet wird. Eine solche gleichzeitige Bearbeitung von mehreren Werkstücken setzt mehrere identisch ausgeführte Werkzeuge voraus, die jeweils in einer der parallel zu den anderen arbeitenden Spindel eingesetzt werden. Die Aufgabe der Erfindung, eine bessere Raumausnutzung bei der Werkzeuglagerung zu erzielen, wird auch gelöst durch die Verwendung eines erfindungsgemäßen Werkzeugmagazins zur Lagerung von eben solchen identisch ausgeführten Werkzeugen, auch Zwillingswerkzeuge genannt, die bei einer parallelen Mehrspindelbearbeitung für identische Bearbeitungsschritte gleichzeitig benötigt werden. Die gleichartig ausgeführten Werkzeuge eines Arbeitsganges werden dabei in benachbarten, aneinander angrenzenden Aufnahmepositionen eingelagert, welche sich in Entnahmerichtung hintereinander befinden. Alle identisch ausgeführten Werkzeuge werden somit in einer Art Fach zusammen und im Vergleich zum Stand der Technik platzsparend gelagert.

Schließlich wird die Aufgabe auch gelöst durch ein Verfahren zur Entnahme von Werkzeugen aus einem Werkzeugmagazin einer Werkzeugmaschine.

Das Verfahren kann insbesondere mit einem erfindungsgemäßen Werkzeugmagazin und/oder mit einer erfindungsgemäßen Werkzeugmaschine durchgeführt werden. Dabei kann auf alle hierin beschriebenen Ausführungen und Varianten zurückgegriffen werden.

Das Verfahren umfasst die Schritte, die im Anspruch 12 definiert sind.

Eine jeweilige Entnahme kann mittels einer Transfereinrichtung ausgeführt werden, welche um eine Drehachse drehbar ist und einen um die Drehachse drehbaren Träger aufweist, an dessen Enden jeweils mindestens ein Greifer zur Aufnahme von Werkzeugen vorgesehen ist. Diesbezüglich kann auf alle hierein beschriebenen Ausführungen und Varianten zurückgegriffen werden.

Ein erfindungsgemäßes Verfahren, zur Entnahme von Werkzeugen aus einem Werkzeugmagazin, beinhaltet zunächst eine Entscheidung, ob ein benötigtes Werkzeug sich auf einer Aufnahmeposition befindet, die direkt zugänglich ist oder nicht. Für den Fall dass ein Werkzeugmagazin nach einer der oben beschriebenen Ausführungsformen eingesetzt wird, könnte sich ein benötigtes Werkzeug in einer Aufnahmeposition befinden, die sich in Entnahmerichtung hinter einer anderen Aufnahmeposition befindet, in der ein nicht benötigtes Werkzeug eingelagert ist. Das benötigte Werkzeug ist in diesem Fall nicht direkt zugänglich. Für den Fall, dass ein benötigtes Werkzeug nicht direkt zugänglich ist, wird das Werkzeug, welches einer Entnahme des benötigten Werkzeugs entgegensteht, zuerst entnommen und zwischengespeichert. Anschließend wird dann das benötigte oder angeforderte Werkzeug aus seiner Aufnahmepositionen entnommen. Für den Fall, dass das benötigte und angeforderte Werkzeug direkt zugänglich ist, wird dieses direkt aus seiner Aufnahmepositionen entnommen, ohne dass weitere Schritte erforderlich sind.

Des Weiteren ist vorgesehen, dass das entnommene Werkzeug direkt einer Spindel einer Werkzeugmaschine zugeführt wird oder, dass das entnommene Werkzeug vor der Zuführung zu einer Spindel einer Werkzeugmaschine in einem zweiten Werkzeugmagazin zwischengelagert wird oder, dass die Zwischenspeicherung der Werkzeuge von der Transfereinrichtung übernommen wird. Das nach einem erfindungsgemäßen Verfahren entnommene Werkzeug kann auf verschiedene Arten genutzt werden. So ist es möglich, dass das entnommene Werkzeug direkt einer Spindel einer Werkzeugmaschine zugeführt wird und dort für einen Bearbeitungsvorgang eines Werkstücks eingesetzt wird. Alternativ kann das entnommene Werkzeug zunächst in ein zweites Werkzeugmagazin übergeben werden, wo es zwischengelagert wird und von wo aus es dann letztlich in die Werkzeugspindel eingebracht wird. Weiterhin kann alternativ oder zusätzlich zur direkten Übergabe an eine Spindel oder der Zwischenlagerung in einem weiteren Werkzeugmagazin die Transfereinrichtung eine Zwischenspeicherung der Werkzeuge übernehmen. Eine derartige Zwischenspeicherung durch die Transfereinrichtung ist dann besonders günstig, wenn das angeforderte Werkzeug nicht direkt zugänglich ist und zuerst ein anderes, nicht benötigtes Werkzeug entnommen werden muss um den Weg freizumachen für die Entnahme des benötigten Werkzeugs. Dieses zuerst entnommene, nicht benötigte Werkzeug wird dann vorteilhaft von der Transfereinrichtung zwischengespeichert, was für eine zügige Entnahme des benötigten Werkzeugs sorgt.

In den Zeichnungen ist die Erfindung, insbesondere in Ausführungsbeispielen, schematisch dargestellt. Es zeigen:
- Fig. 1: eine Draufsicht auf eine Werkzeugmaschine mit einer Ausführungsform eines erfindungsgemäßen Werkzeugmagazins,
- Fig. 2: eine perspektivische Ansicht mehrerer Aufnahmepositionen einer Ausführungsform eines erfindungsgemäßen Werkzeugmagazins,
- Fig. 3: eine perspektivische Gesamtansicht einer Ausführungsform eines erfindungsgemäßen Werkzeugmagazins.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

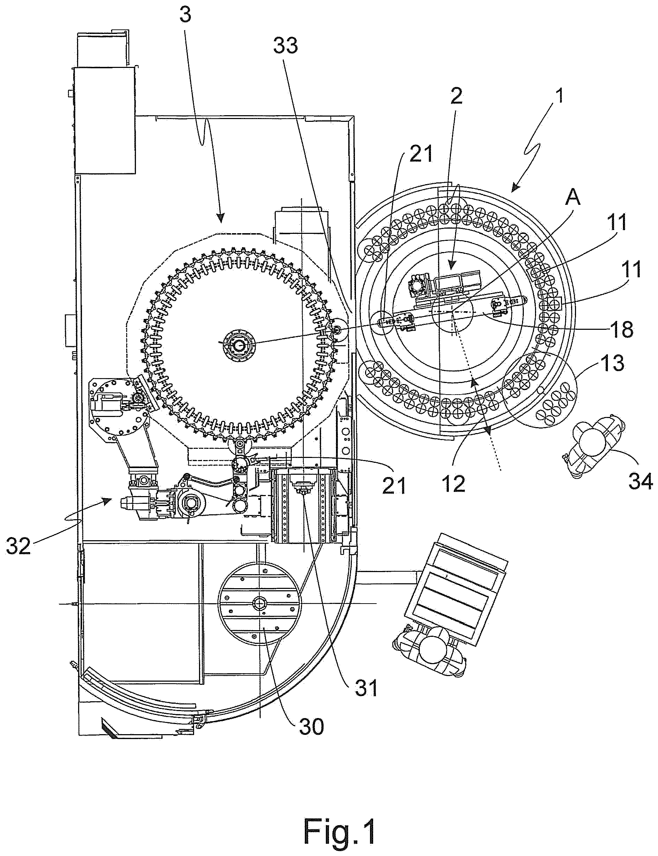

Fig. 1 zeigt eine Draufsicht auf eine Werkzeugmaschine mit einer Ausführungsform eines erfindungsgemäßen Werkzeugmagazins. Auf der linken Seite von Fig.1 ist eine Werkzeugmaschine dargestellt. Unten ist dabei der Spanntisch 30 für das oder die Werkstücke zu sehen, die Arbeitsspindel 31 befindet sich rechts oberhalb des Spanntisches 30. Innerhalb der Werkzeugmaschine befindet sich hier ein herkömmliches Werkzeugmagazin 3, bei welchem die Werkzeuge mithilfe eines Magazinrades gelagert und transportiert werden. Die Werkzeuge werden vom Werkzeugmagazin 3 durch die Wechseleinrichtung 32 zur Arbeitsspindel 31 transportiert und in diese eingesetzt. Ebenso werden nicht mehr benötigte Werkzeuge von der Wechseleinrichtung 32 aus der Arbeitsspindel 31 entnommen und zurück in das Werkzeugmagazin 3 gebracht. Die Wechseleinrichtung 32 ist hier als mehrgelenkiger Manipulatorarm ausgeführt, der an seiner Spitze einen Greifer 21 aufweist. Angrenzend an die links dargestellte Werkzeugmaschine ist ein weiteres Werkzeugmagazin 1, gemäß einer Ausführungsform der Erfindung, dargestellt. Die Werkzeugmaschine und das Werkzeugmagazin 1 sind über die Verbindungsöffnung 33 miteinander verbunden. Die in Werkzeugmagazin 1 eingelagerten Werkzeuge sind mehrreihig hintereinander angeordnet. Jedes Werkzeug wird auf einer eigenen Aufnahmeposition 11 gelagert, wobei jede Aufnahmepositionen 11 nur ein Werkzeug aufnehmen kann. Die Aufnahmepositionen 11 sind, im dargestellten Fall, nebeneinander und hintereinander angeordnet. In der dargestellten Draufsicht sind Aufnahmepositionen zunächst kreisbogenförmig um eine, in die Zeichnungsebene hinein verlaufende Drehachse A angeordnet. Die Entnahmerichtung 12 für Werkzeuge aus dieser kreisbogenförmigen Anordnung verläuft hier radial zur Drehachse A. Bei der Entnahme der Werkzeuge aus ihren Aufnahmepositionen 11 werden diese Werkzeuge zumindest zu Beginn der Entnahme entlang der Entnahmerichtung 12 bewegt. Nach der eigentlichen Entnahme aus den Aufnahmepositionen 11 werden die Werkzeuge dann selbstverständlich auch in andere Richtungen bewegt, um zur Werkzeugmaschine bzw. der Arbeitsspindel 31 zu gelangen. In dem in Fig. 1 dargestellten Werkzeugmagazin 1 sind Aufnahmepositionen 11 für Werkzeuge in zwei konzentrisch um die Drehachse A velaufenden, kreisförmigen Bögen angeordnet. Dabei liegt, in Entnahmerichtung 12 betrachtet, hinter einer Aufnahmeposition 11 des inneren Kreisbogens jeweils eine Aufnahmeposition 11 des äußeren Kreisbogens. Es können selbstverständlich auch mehr als zwei Aufnahmepositionen 11 in Entnahmerichtung 12 hintereinander angeordnet werden. In Fig. 1 ist deutlich erkennbar, dass das erfindungsgemäß ausgeführte Werkzeugmagazin 1 nahezu die doppelte Menge an Werkzeugen einlagern kann als das konventionelle Werkzeugmagazin 3, wobei die Außenabmessungen bzw. der benötigte Bauraum beider Werkzeugmagazine nahezu identisch ist. Das Werkzeugmagazin 1 ist zusätzlich in mehreren Etagen vertikal übereinander ausgeführt, um noch mehr Aufnahmepositionen 11 zur Einlagerung von Werkzeugen zur Verfügung stellen zu können. In der Mitte des Werkzeugmagazins 1 ist, drehbar um die Drehachse A gelagert, die Transfereinrichtung 2 zu sehen. Mithilfe der Transfereinrichtung 2 werden die Werkzeuge aus den Aufnahmepositionen 11 entnommen, zwischengespeichert und wieder eingelagert. Die Transfereinrichtung 2 wird, im dargestellten Fall, von einem Träger 18 gebildet, der an jedem seiner Enden jeweils einen Greifer 21 aufweist. Die Transfereinrichtung 2 bewegt sich beim Werkzeugtransfer in verschiedene Richtungen: der Träger 18 ist drehbar um die Drehachse A gelagert, wobei auch ein geeigneter Drehantrieb vorgesehen ist. Die Greifer 21 können sich zusätzlich linear, entlang der Längsrichtung des Trägers 18, vor und zurück bewegen. Darüber hinaus bewegt sich der Träger 18 zusammen mit den Greifern 21 in vertikaler Richtung d.h. entlang der in die Zeichnungsebene hinein verlaufenden Drehachse A. Selbstverständlich können weitere Freiheitsgrade für die Transfereinrichtung vorgesehen werden. Im dargestellten Fall übergibt die Transfereinrichtung 2 ein aus dem Werkzeugmagazin 1 entnommenes Werkzeug durch die Verbindungsöffnung an das Werkzeugmagazin 3, welches wiederum im Inneren der Werkzeugmaschine angeordnet ist. In anderen Ausführungsformen wäre es aber auch denkbar, dass die Transfereinrichtung 2 ein entnommenes Werkzeug direkt der Arbeitsspindel 31 übergibt. Für die Bestückung des Werkzeugmagazins 1 mit Werkzeugen sind eine oder mehrere Schleusen 13 vorgesehen. Über diese Schleusen 13 können Werkzeuge gruppenweise von einem Bediener 34 in das Werkzeugmagazin 1 eingebracht und entnommen werden.

Das in Fig. 1 als dem Stand der Technik entsprechend dargestellte Werkzeugmagazin 3 kann auch von einem erfindungsgemäßen Werkzeugmagazin, beispielsweise in der rechts neben der Bearbeitungsmaschine dargestellten Form eines Werkzeugmagazin 1 gebildet sein.

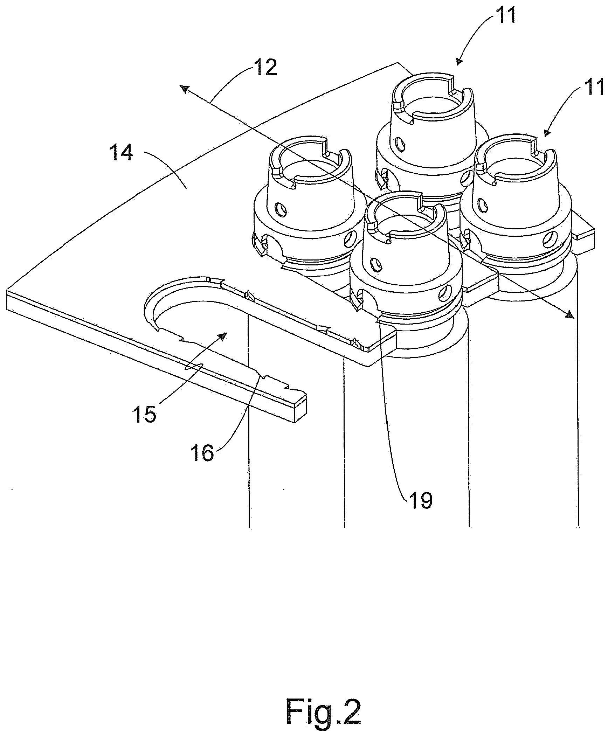

Fig. 2 zeigt eine perspektivische Ansicht mehrerer Aufnahmepositionen 11 einer Ausführungsform eines erfindungsgemäßen Werkzeugmagazins. In der dargestellten Ausführungsform wird die Basis der Aufnahmepositionen 11 von einem plattenförmigen Element 14 gebildet. Die Aufnahmepositionen 11 sind hier zu je zwei Stück in Aufnahmeschlitzen 15 angeordnet. Die zwei Aufnahmepositionen 11 eines Aufnahmeschlitzes 15 sind dabei in Entnahmerichtung 12 hintereinander angeordnet. In der dargestellten Ausführungsform sind an den Aufnahmeschlitzen 15 in jeder Aufnahmeposition 11 jeweils Indexierbereiche 16 vorgesehen. Diese Indexierbereiche 16 dienen dazu, die Werkzeuge in den Aufnahmepositionen 11 stets in gleicher rotatorischer Ausrichtung einzulagern. Durch eine stets identische rotatorische Ausrichtung ist ein problemloses Einsetzen der Werkzeuge in die Werkzeugmaschine sichergestellt. Die Indexierbereiche 16 sind im dargestellten Fall als Ausnehmungen ausgeführt, in die die entsprechenden Schlüsselbereiche 19 der Werkzeuge formschlüssig eingebracht werden.

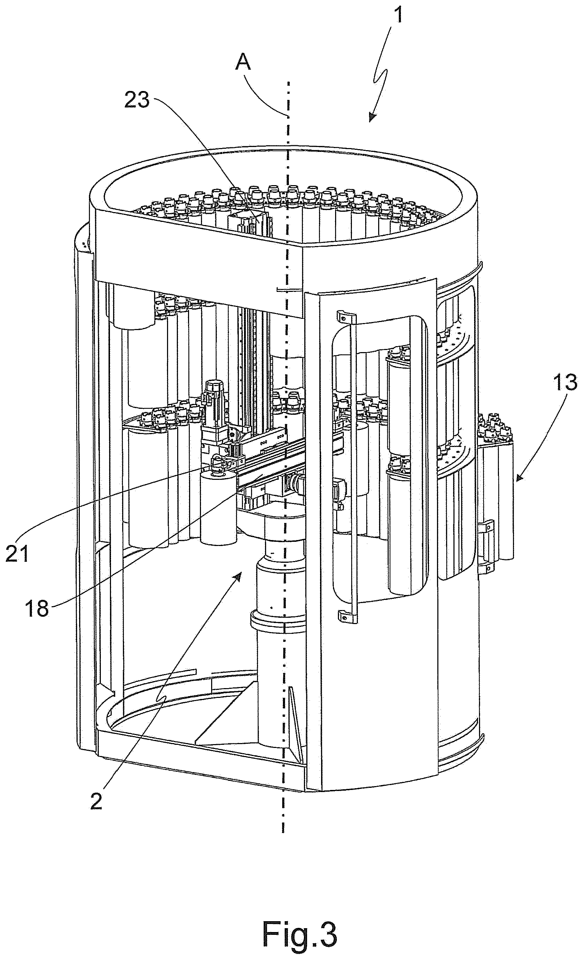

Fig. 3 zeigt eine perspektivische Gesamtansicht einer Ausführungsform eines erfindungsgemäßen Werkzeugmagazins 1. Das Werkzeugmagazin 1 in Fig. 3 entspricht dem Werkzeugmagazin 1 in Fig. 1. In der perspektivischen Darstellung von Fig. 3 sind deutliche mehrere Etagen von Werkzeugen bzw. Aufnahmepositionen 11 übereinander zu erkennen. Im Zentrum des Werkzeugmagazins 1 ist die Transfereinrichtung 2 zu erkennen, die drehbar um die Drehachse A angeordnet ist. Zur Ausführung der Drehbewegungen um die Drehachse A ist im unteren Bereich der Transfereinrichtung 2 ein Drehantrieb vorgesehen. Die Transfereinrichtung 2 weist einen hier horizontal verlaufenden Träger 18 auf, an dessen Enden jeweils Greifer 21 angebracht sind. Im dargestellten Fall hält der Greifer 21 am vorderen Ende des Trägers 18 gerade ein Werkzeug. Der Träger 18 ist zusätzlich entlang seiner Längsrichtung linear beweglich. Um die verschiedenen Etagen erreichen zu können ist der gesamte Träger 18 mit den Greifern 21 auch in vertikaler Richtung entlang oder parallel der Drehachse A beweglich. Im dargestellten Fall ist für diese vertikale Bewegung an der Transfereinrichtung 2 eine Linearführung 23 mit entsprechendem Antrieb vorgesehen. Auf der rechten Seite des dargestellten Werkzeugmagazins 1 sind Werkzeuge zu sehen, die über die Schleuse 13 aus dem Werkzeugmagazin 1 entnommen wurden bzw. in das Werkzeugmagazin 1 eingebracht werden sollen. Die nach vorne gerichtete Öffnung des Werkzeugmagazins 1 ist durch Schutztüren verschließbar. Das dargestellte Werkzeugmagazin kann so komplett gegen Betreten von Bedienern gesichert werden. Ein erfindungsgemäßes Werkzeugmagazin 1 kann, wie dargestellt, in einem eigenen Gehäuse untergebracht sein. Alternativ ist es aber auch möglich ein Werkzeugmagazin 1 innerhalb einer Werkzeugmaschine und deren Gehäuse anzuordnen.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst:
Ein Werkzeugmagazin zur Bereitstellung von Werkzeugen für eine Werkzeugmaschine, wobei das Werkzeugmagazin eine Vielzahl von Aufnahmepositionen für Werkzeuge aufweist und ein erstes Werkzeug entlang einer Entnahmerichtung aus einer ersten Aufnahmeposition entnehmbar oder einlegbar ist, wobei das Werkzeugmagazin in Entnahmerichtung vor oder hinter der ersten Aufnahmeposition mindestens eine weitere Aufnahmeposition aufweist, die je zur Aufnahme eines weiteren Werkzeugs vorgesehen ist.

Ein wie zuvor ausgeführtes Werkzeugmagazin, wobei mindestens eine Transfereinrichtung vorgesehen ist, die zumindest einen Teil des Transports der Werkzeuge im Werkzeugmagazin und/oder zu einer Schnittstelle vornimmt.

Ein wie zuvor ausgeführtes Werkzeugmagazin, wobei die Transfereinrichtung um eine Drehachse drehbar ist und/oder entlang zumindest einer Längsachse beweglich gelagert ist.

Ein wie zuvor ausgeführtes Werkzeugmagazin, wobei die Transfereinrichtung drei oder mehr Greifer aufweist, wobei ein erster Greifer dafür vorgesehen ist, ein einzulagerndes Werkzeug zu tragen, ein zweiter Greifer dafür vorgesehen ist, das auszulagernde Werkzeug zu tragen und mindestens ein weiterer Greifer als temporärer Zwischenspeicher für ein, auf einer das Ein- und Auslagern eines Werkzeugs behindernden Aufnahmeposition zunächst ruhendes Werkzeug vorgesehen ist.

Ein wie zuvor ausgeführtes Werkzeugmagazin, wobei die Transfereinrichtung einen um die Drehachse drehbaren Träger aufweist an dessen Enden mindestens ein Greifer, an einem Ende bevorzugt auch zwei Greifer vorgesehen sind.

Ein wie zuvor ausgeführtes Werkzeugmagazin, wobei die Aufnahmepositionen bewegbar sind und sich beim Werkzeugtransfer relativ zur Transfereinrichtung bewegen.

Ein wie zuvor ausgeführtes Werkzeugmagazin, wobei die Aufnahmepositionen im Wesentlichen ortsfest sind und sich beim Werkzeugtransfer die Transfereinrichtung relativ zu den Aufnahmepositionen bewegt.

Ein wie zuvor ausgeführtes Werkzeugmagazin, wobei sich das Werkzeugmagazin außerhalb oder innerhalb der Werkzeugmaschine befindet, für die es die Werkzeuge bereitstellt.

Ein wie zuvor ausgeführtes Werkzeugmagazin, wobei eine Vielzahl von Aufnahmepositionen in mehreren Etagen hintereinander oder übereinander angeordnet ist.

Ein wie zuvor ausgeführtes Werkzeugmagazin, wobei das Werkzeugmagazin als Regal-, Scheiben-, Ringmagazin oder Ähnliches ausgebildet ist und die Aufnahmepositionen von einem plattenförmigen Element des Werkzeugmagazins gebildet werden, in welches Aufnahmeschlitze eingebracht sind und die Werkzeuge hintereinander in Entnahmerichtung in diesen Aufnahmeschlitzen angeordnet sind.

Ein wie zuvor ausgeführtes Werkzeugmagazin, wobei an dem Aufnahmeschlitz mindestens ein Indexierbereich vorgesehen ist, der die radiale/rotatorische Ausrichtung eines Werkzeugs in der Aufnahmeposition bestimmt.

Ein wie zuvor ausgeführtes Werkzeugmagazin, wobei als Werkzeugmagazin ein Kettenmagazin vorgesehen ist und die Aufnahmeposition an mindestens einem Kettenglied angeordnet ist.

Die Erfindung umfasst des Weiteren eine Werkzeugmaschine mit mindestens einem Werkzeugmagazin, nach einer oder mehreren der vorhergehenden Ausführungsformen.

Eine wie zuvor ausgeführte Werkzeugmaschine, wobei sich mindestens ein erstes Werkzeugmagazin nach einem oder mehreren der zuvor beschriebenen Ausführungsformen außerhalb der Werkzeugmaschine befindet und in oder an der Werkzeugmaschine ein zweites Werkzeugmagazin vorgesehen ist.

Die Erfindung umfasst auch eine Verwendung eines Werkzeugmagazins, nach einer oder mehreren der vorhergehenden Ausführungsformen, für die Anordnung und Bereitstellung von Werkzeugen, welche eine identische Ausführung aufweisen und für identische Bearbeitungsschritte an Werkstücken vorgesehen sind, in benachbarten Aufnahmepositionen, die in Entnahmerichtung hintereinander angeordnet sind.

Die Erfindung umfasst auch ein Verfahren zur Entnahme von Werkzeugen aus einem Werkzeugmagazin einer Werkzeugmaschine umfassend die Schritte: A) Entnahme eines angeforderten Werkzeugs aus der Aufnahmeposition, falls das angeforderte Werkzeug direkt zugänglich ist, B) Entnahme eines anderen Werkzeugs, welches in einer Aufnahmeposition gelagert ist, die sich in Entnahmerichtung vor dem angeforderten Werkzeug befindet, Zwischenspeicherung dieses anderen Werkzeuges und anschließende Entnahme des angeforderten Werkzeugs aus dessen Aufnahmeposition, falls das angeforderte Werkzeug nicht direkt zugänglich ist.

Das Verfahren kann insbesondere mittels eines zuvor genannten Werkzeugmagazins und/oder mittels einer zuvor genannten Werkzeugmaschine durchgeführt werden. Eine Entnahme kann insbesondere mittels einer zuvor genannten Transfereinrichtung erfolgen.

Das zuvor genannte Verfahren, alternativ umfassend die Schritte, dass das entnommene Werkzeug direkt einer Spindel einer Werkzeugmaschine zugeführt wird oder, dass das entnommene Werkzeug vor der Zuführung zu einer Spindel einer Werkzeugmaschine in einem zweiten Werkzeugmagazin zwischengelagert wird oder, dass die Zwischenspeicherung der Werkzeuge von der Transfereinheit übernommen wird.

## Patentansprüche

1. Werkzeugmagazin zur Bereitstellung von Werkzeugen für eine Werkzeugmaschine, wobei das Werkzeugmagazin eine Vielzahl von Aufnahmepositionen (11) für Werkzeuge aufweist und ein erstes Werkzeug entlang einer Entnahmerichtung (12) aus einer ersten Aufnahmeposition (11) entnehmbar oder einlegbar ist, wobei das Werkzeugmagazin in Entnahmerichtung (12) vor oder hinter der ersten Aufnahmeposition (11) mindestens eine weitere Aufnahmeposition (11) aufweist, die je zur Aufnahme eines weiteren Werkzeugs vorgesehen ist, wobei mindestens eine Transfereinrichtung (2) vorgesehen ist, die zumindest einen Teil des Transports der Werkzeuge im Werkzeugmagazin und/oder zu einer Schnittstelle vornimmt und die Transfereinrichtung (2) um eine Drehachse (A) drehbar ist und die Transfereinrichtung (2) einen um die Drehachse (A) drehbaren Träger (18) aufweist, **dadurch gekennzeichnet, dass** an den Enden des Trägers (18) jeweils mindestens ein Greifer (21) zur Aufnahme von Werkzeugen vorgesehen ist und die Transfereinrichtung (2) drei oder mehr Greifer (21) aufweist, wobei ein erster Greifer (21) dafür vorgesehen ist, ein einzulagerndes Werkzeug zu tragen, ein zweiter Greifer (21) dafür vorgesehen ist, das auszulagernde Werkzeug zu tragen und mindestens ein weiterer Greifer (21) als temporärer Zwischenspeicher für ein, auf einer das Einund Auslagern eines Werkzeugs behindernden Aufnahmeposition (11) zunächst ruhendes Werkzeug vorgesehen ist.

2. Werkzeugmagazin nach Anspruch 1, **dadurch gekennzeichnet, dass** die Transfereinrichtung (2) entlang zumindest einer Längsachse beweglich gelagert ist.

3. Werkzeugmagazin nach einem der vorhergehenden Ansprüche, **dadurch gekennzeichnet, dass** die Aufnahmepositionen (11) bewegbar sind und sich beim Werkzeugtransfer relativ zur Transfereinrichtung (2) bewegen, oder die Aufnahmepositionen (11) im Wesentlichen ortsfest sind und sich beim Werkzeugtransfer die Transfereinrichtung (2) relativ zu den Aufnahmepositionen (11) bewegt.

4. Werkzeugmagazin nach einem der vorhergehenden Ansprüche, **dadurch gekennzeichnet, dass** an einem Ende des Trägers (18) zwei Greifer (21) vorgesehen sind.

5. Werkzeugmagazin nach einem der vorhergehenden Ansprüche, **dadurch gekennzeichnet, dass** eine Vielzahl von Aufnahmepositionen (11) in mehreren Etagen hintereinander oder übereinander angeordnet sind.

6. Werkzeugmagazin nach einem der vorhergehenden Ansprüche, **dadurch gekennzeichnet, dass** das Werkzeugmagazin als Regal, Scheiben-, Ringmagazin oder Ähnliches ausgebildet ist und die Aufnahmepositionen (11) von einem plattenförmigen Element (14) des Werkzeugmagazins gebildet werden, in welches Aufnahmeschlitze (15) eingebracht sind und die Werkzeuge hintereinander in Entnahmerichtung (12) in diesen Aufnahmeschlitzen (15) angeordnet sind.

7. Werkzeugmagazin nach einem der vorhergehenden Ansprüche, **dadurch gekennzeichnet, dass** an dem Aufnahmeschlitz mindestens ein Indexierbereich (16) vorgesehen ist, der die radiale/rotatorische Ausrichtung eines Werkzeugs in der Aufnahmeposition (11) bestimmt.

8. Werkzeugmagazin nach einem der vorhergehenden Ansprüche, **dadurch gekennzeichnet, dass** als Werkzeugmagazin ein Kettenmagazin vorgesehen ist und die Aufnahmeposition (11) an mindestens einem Kettenglied angeordnet ist.

9. Werkzeugmaschine mit mindestens einem Werkzeugmagazin nach einem der vorhergehenden Ansprüche.

10. Werkzeugmaschine nach Anspruch 9, **dadurch gekennzeichnet, dass** sich mindestens ein erstes Werkzeugmagazin nach einem oder mehreren der Ansprüche 1 bis 8 außerhalb der Werkzeugmaschine befindet und in oder an der Werkzeugmaschine ein zweites Werkzeugmagazin (3) vorgesehen ist.

11. Verwendung eines Werkzeugmagazins nach einem der Ansprüche 1 bis 8 für die Anordnung und Bereitstellung von Werkzeugen, welche eine identische Ausführung aufweisen und für identische Bearbeitungsschritte an Werkstücken vorgesehen sind, in benachbarten Aufnahmepositionen (11), die in Entnahmerichtung (12) hintereinander angeordnet sind.

12. Verfahren zur Entnahme von Werkzeugen aus einem Werkzeugmagazin einer Werkzeugmaschine umfassend die Schritte:
A) Entnahme eines angeforderten Werkzeugs mittels einer Transfereinrichtung (2), welche um eine Drehachse (A) drehbar ist und einen um die Drehachse (A) drehbaren Träger (18) aufweist, an dessen Enden jeweils mindestens ein Greifer (21) zur Aufnahme von Werkzeugen vorgesehen ist, wobei die Transfereinrichtung (2) drei oder mehr Greifer (21) aufweist, aus der Aufnahmeposition (11), falls das angeforderte Werkzeug direkt zugänglich ist, und
B) Entnahme eines anderen Werkzeugs mittels der Transfereinrichtung (2), welches in einer Aufnahmeposition (11) gelagert ist, die sich in Entnahmerichtung (12) vor dem angeforderten Werkzeug befindet, Zwischenspeicherung dieses anderen Werkzeuges und anschließende Entnahme des angeforderten Werkzeugs mittels der Transfereinrichtung (2) aus dessen Aufnahmeposition (11), falls das angeforderte Werkzeug nicht direkt zugänglich ist.

13. Verfahren nach Anspruch 12, **dadurch gekennzeichnet, dass** das entnommene Werkzeug direkt einer Spindel einer Werkzeugmaschine zugeführt wird.

14. Verfahren nach Anspruch 12, **dadurch gekennzeichnet, dass** das entnommene Werkzeug vor der Zuführung zu einer Spindel einer Werkzeugmaschine in einem zweiten Werkzeugmagazin zwischengelagert wird, oder dass die Zwischenspeicherung der Werkzeuge von der Transfereinrichtung übernommen wird.

## Claims

1. Tool magazine for the provision of tools for a machine tool, wherein the tool magazine has a plurality of pick-up positions (11) for tools and a first tool can be removed from or inserted into a first pick-up position (11) along a removal direction (12), wherein the tool magazine has at least one further pick-up position (11) in removal direction (12) ahead of or behind the first pick-up position (11), which further pick-up position is intended for picking up a further tool, wherein at least one transfer device (2) is provided which performs at least part of the transport of the tools in the tool magazine and/or to an interface and the transfer device (2) is rotatable about an axis of rotation (A) and the transfer device (2) has a carrier (18) rotatable about an axis of rotation (A), **characterised in that** at the ends of the carrier (18) respectively at least one gripper (21) is provided for picking up tools and the transfer device (2) has three or more grippers (21), wherein a first gripper (21) is provided to carry a tool to be mounted, a second gripper (21) is provided to carry the tool to be removed and at least one further gripper (21) is provided as temporary storage for a tool resting initially on a pick-up position (11) which prevents the insertion and removal of a tool.

2. Tool magazine according to claim 1, **characterised in that** the transfer device (2) is mounted to be movable along at least one longitudinal axis.

3. Tool magazine according to any of the preceding claims, **characterised in that** the pick-up positions (11) are movable and move relative to the transfer device (2) during the tool transfer, or the pick-up positions (11) are essentially stationary and the transfer device (2) moves relative to the pick-up positions (11) during the tool transfer.

4. Tool magazine according to any of the preceding claims, **characterised in that** two grippers (21) are provided at one end of the carrier (18).

5. Tool magazine according to any of the preceding claims, **characterised in that** a plurality of pick-up positions (11) are arranged behind one another or above one another in a plurality of levels.

6. Tool magazine according to any of the preceding claims, **characterised in that** the tool magazine is designed as a rack magazine, disc magazine, ring magazine or similar, and the pick-up positions (11) are formed by a plate-like element (14) of the tool magazine, in which receiving slots (15) are formed and the tools are arranged in these receiving slots (15) behind one another in removal direction (12).

7. Tool magazine according to any of the preceding claims, **characterised in that** at least one indexing region (16), which determines the radial/rotational alignment of a tool in the pick-up position (11), is provided at the pick-up slot.

8. Tool magazine according to any of the preceding claims, **characterised in that** a chain magazine is provided as a tool magazine and the pick-up position (11) is arranged at at least one chain link.

9. Machine tool having at least one tool magazine according to any of the preceding claims.

10. Machine tool according to claim 9, **characterised in that** at least one first tool magazine according to one or more of claims 1 to 8 is located outside the machine tool and a second tool magazine (3) is provided in or on the machine tool.

11. Use of a tool magazines according to any of claims 1 to 8 for the arrangement and provision of tools, which have an identical design and are provided for identical processing steps on workpieces, in adjacent pick-up positions (11), which are arranged behind one another in removal direction (12).

12. Method for removing tools from a tool magazine of a machine tool comprising the steps:
A) removing a requested tool by means of a transfer device (2), which is rotatable about an axis of rotation (A) and has a carrier (18) rotatable about the axis of rotation (A), at the ends of which at least one gripper (21) is provided for picking up tools, wherein the transfer device (2) has three or more grippers (21), from the pick-up position (11), if the required tool is directly accessible, and
B) removing another tool by means of the transfer device (2), which tool is mounted in a pick-up position (11), which is located in removal direction (12) ahead of the requested tool, temporarily storing this other tool and then removing the requested tool by means of the transfer device (2) from its pick-up position (11), in case the requested tool is not directly accessible.

13. Method according to claim 12, **characterised in that** the removed tool is supplied directly to a spindle of a machine tool.

14. Method according to claim 12, **characterised in that** the removed tool is stored temporarily in a second tool magazine before being supplied to a spindle of a machine tool, or the temporary storage of the tools is undertaken by the transfer device.

## Revendications

1. Magasin d'outils pour la fourniture d'outil pour une machine-outil, dans lequel le magasin d'outils présente une pluralité de positions de réception (11) pour des outils et un premier outil peut être retiré ou inséré le long d'un sens de retrait (12) d'une première position de réception (11), dans lequel le magasin d'outils présente dans le sens de retrait (12) avant ou derrière la première position de réception (11) au moins une autre position de réception (11) qui est prévue chaque fois pour la réception d'un autre outil, dans lequel au moins un dispositif de transfert (2) est prévu, lequel entreprend au moins une partie du transport des outils dans le magasin d'outils et/ou vers une interface et le dispositif de transfert (2) peut être tourné autour d'un axe de rotation (A) et le dispositif de transfert (2) présente un support (18) rotatif autour de l'axe de rotation (A), **caractérisé en ce qu'**aux extrémités du support (18) respectivement au moins un élément de préhension (21) est prévu pour la réception d'outils et le dispositif de transfert (2) présente trois ou plus éléments de préhension (21), dans lequel un premier élément de préhension (21) est prévu afin de porter un outil à charger, un deuxième élément de préhension (21) est prévu afin de porter l'outil à décharger et au moins un autre élément de préhension (21) comme stockage intermédiaire temporaire pour un outil reposant tout d'abord sur une position de réception (11) empêchant le chargement et le déchargement d'un outil est prévu.

2. Magasin d'outils selon la revendication 1, **caractérisé en ce que** le dispositif de transfert (2) est logé de manière mobile le long d'au moins un axe longitudinal.

3. Magasin d'outils selon l'une quelconque des revendications précédentes, **caractérisé en ce que** les positions de réception (11) sont mobiles et se déplacent lors du transfert d'outil par rapport au dispositif de transfert (2), ou les positions de réception (11) sont sensiblement fixes et le dispositif de transfert (2) se déplace lors du transfert d'outil par rapport aux positions de réception (11).

4. Magasin d'outils selon l'une quelconque des revendications précédentes, **caractérisé en ce que** deux éléments de préhension (21) sont prévus à une extrémité du support (1).

5. Magasin d'outils selon l'une quelconque des revendications précédentes, **caractérisé en ce qu'**une pluralité de positions de réception (11) est agencée dans plusieurs étages les unes derrière les autres ou les unes au-dessus des autres.

6. Magasin d'outils selon l'une quelconque des revendications précédentes, **caractérisé en ce que** le magasin d'outils est réalisé comme magasin à rayonnage, à plateau, à anneau ou similaires et les positions de réception (11) sont formées par un élément (14) en forme de plaque du magasin d'outils, dans lequel des fentes de réception (15) sont introduites et les outils sont agencés les uns derrière les autres dans le sens de retrait (12) dans ces fentes de réception (15).

7. Magasin d'outils selon l'une quelconque des revendications précédentes, **caractérisé en ce qu'**au moins une zone d'indexation (16) est prévue au niveau de la fente de réception, laquelle détermine l'orientation radiale/rotative d'un outil dans la position de réception (11).

8. Magasin d'outils selon l'une quelconque des revendications précédentes, **caractérisé en ce que** comme magasin d'outils un magasin à chaîne est prévu et la position de réception (11) est agencée au niveau d'au moins un maillon de chaîne.

9. Machine-outil avec au moins un magasin d'outils selon l'une quelconque des revendications précédentes.

10. Machine-outil selon la revendication 9, **caractérisée en ce qu'**au moins un premier magasin d'outils selon l'une ou plusieurs quelconques des revendications 1 à 8 se trouve en dehors de la machine-outil et un second magasin d'outils (3) est prévu dans ou au niveau de la machine-outil.

11. Utilisation d'un magasin d'outils selon l'une quelconque des revendications 1 à 8 pour l'agencement et la fourniture d'outils qui présentent une réalisation identique et sont prévus pour des étapes d'usinage identiques sur des pièces à usiner, dans des positions de réception (11) contigües qui sont agencées dans le sens de retrait (12) les unes derrière les autres.

12. Procédé de retrait d'outils d'un magasin d'outils d'une machine-outil comprenant les étapes :
A) le retrait d'un outil demandé au moyen d'un dispositif de transfert (2), qui est rotatif autour d'un axe de rotation (A) et présente un support (18) rotatif autour de l'axe de rotation (A), aux extrémités duquel respectivement au moins un élément de préhension (21) est prévu pour la réception d'outils, dans lequel le dispositif de transfert (2) présente trois ou plus éléments de préhension (21), à partir de la position de réception (11) au cas où l'outil demandé est directement accessible, et
B) le retrait d'un autre outil au moyen du dispositif de transfert (2) qui est logé dans une position de réception (11) qui se trouve dans le sens de retrait (12) avant l'outil demandé, le stockage intermédiaire de cet autre outil et le retrait consécutif de l'outil demandé au moyen du dispositif de transfert (2) à partir de sa position de réception (11), au cas où l'outil demandé n'est pas directement accessible.

13. Procédé selon la revendication 12, **caractérisé en ce que** l'outil retiré est amené directement à une broche d'une machine-outil.

14. Procédé selon la revendication 12, **caractérisé en ce que** l'outil retiré est entreposé avant l'amenée à une broche d'une machine-outil dans un second magasin d'outils, ou que l'entreposage des outils est entrepris par le dispositif de transfert.
